# FASCICULE DE BREVET EUROPEEN

(11) **EP 0 877 319 B1**
(45) Date de publication et mention de la délivrance du brevet: **12.01.2005**
(21) Numéro de dépôt: 98401027.2
(22) Date de dépôt: 27.04.1998
(51) Int. Cl.: G06F 9/46, H04L 29/06

(54) **Procédé et dispositif de transmission d'une notification comportant plusieurs services de notification**
Verfahren und Vorrichtung zum Nachrichtenaustausch zwischen mehreren Nachrichtenaustauschdiensten
Method and apparatus for notification transmission comprising several notification services

(30) Priorité: 02.05.1997 FR 9705451
(43) Date de publication de la demande: 11.11.1998
(73) Titulaire: ALCATEL, 75008 Paris (FR)
(72) Inventeur: Couturier, Alban, 75013 Paris (FR); Ruffin, Michel, 92500 Rueil Malmaison (FR); Van Der Meulen, Marcel, 75014 Paris (FR)
(74) Mandataire: Lamoureux, Bernard

(56) Documents cités:
- EP-A- 0 258 867
- EP-A- 0 651 328
- EP-A- 0 702 295
- US-A- 5 257 369

## Description

La présente invention concerne un procédé de transmission d'une notification dans un réseau de traitement d'informations à applications distribuées et orientées objets. Elle concerne en outre un tel réseau.

L'invention s'applique en particulier à l'architecture d'objets distribués de réseaux respectant la spécification "Common Object Request Broker Architecture" (CORBA) publiée par "The Object Management Group" (OMG).

Dans la présente demande, le terme "service de notifications" est utilisé pour désigner tant un service de notifications proprement dit ("notification service" en anglais) qu'un service d'événements ("event service" en anglais).

Dans la plate-forme CORBA, les services de notifications sont couramment définis pour la communication asynchrone entre des objets distribués.

Ces objets sont distribués sur les différentes unités de traitement d'informations présentes dans le réseau. Ils communiquent par l'intermédiaire d'un bus logiciel désigné par "Object Request Broker" (ORB) dans la spécification CORBA. Le bus logiciel peut être divisé en plusieurs zones de notifications qui correspondent généralement mais non obligatoirement à des sites géographiquement éloignés. Chaque zone de notifications comporte un service de notifications propre pour adresser des notifications entre les objets de la zone considérée.

Les unités de traitement d'informations sont par exemple des autocommutateurs d'un réseau de télécommunication ou encore un ensemble de stations de travail reliées à une ou plusieurs imprimantes.

Dans un tel réseau, les objets serveurs où qu'ils soient sur le réseau fournissent des services à des objets clients envoyant sur le réseau des requêtes pour ces services. Le rôle de bus logiciel est de délivrer les requêtes aux objets concernés et de retourner les valeurs de sortie aux objets clients. Cette opération s'effectue de manière transparente pour l'objet client. En particulier, celui-ci ne sait pas où les objets résident sur le réseau, comment ils sont réalisés, comment ils sont mémorisés, ni comment ils sont exécutés.

L'objet client n'a besoin pour adresser une requête que de la référence de l'objet serveur.

Un service de notifications ou d'événements est adapté pour assurer la transmission d'informations issues d'objets émetteurs vers tous ou certains seulement des objets récepteurs inscrits auprès du service.

Un service de notifications se différencie d'un service d'événements en ce que, lors de leur inscription, les objets récepteurs peuvent définir un filtre afin de n'être destinataire que des notifications satisfaisant aux critères de filtrage. En revanche, dans le cas d'un service d'événements, tous les objets récepteurs inscrits pour recevoir une catégorie donnée de notifications reçoivent tous les mêmes notifications.

Un service de notifications est formé d'un ensemble d'objets et notamment d'un administrateur de serveur de notifications et de canaux de notifications chacun propre à une catégorie différente d'informations pouvant être transmises.

Le modèle de communication suivant est utilisé pour ce service. Un ensemble d'émetteurs envoie des notifications vers le service de notifications, qui transmet ces informations vers un ensemble d'objets récepteurs qui sont inscrits pour cette catégorie de notifications.

La demande de brevet européenne EP 0651328 de la société Microsoft considère de tels services de notifications. Toutefois, elle ne divulgue que la situation où tous les objets appartiennent à une même zone de notifications. Cet enseignement souffre de graves déficiences dans le contexte d'un système complexe.

Lorsque le nombre de notifications est très élevé, ou lorsqu'il y a un nombre très élevé d'objets émetteurs ou d'objets récepteurs, le service de notifications devient un goulot d'étranglement ralentissant son fonctionnement.

Ainsi, il est nécessaire d'augmenter le nombre de services de notifications. Les objets du réseau dépendent alors de services de notifications différents de sorte qu'ils ne peuvent pas recevoir les notifications émises par tous les services de notifications.

L'invention a pour but de proposer une solution puissante résolvant le problème posé ci-dessus qui permette d'atteindre des performances élevées, de regrouper les émetteurs et récepteurs de manière logique et permette une mise à l'échelle du réseau, c'est-à-dire une augmentation de la taille du réseau.

A cet effet, l'invention a pour objet un procédé de transmission d'une notification dans un réseau de traitement d'informations à applications distribuées, depuis un émetteur appartenant à une première zone de notifications à laquelle est associé un premier service de notifications, la transmission s'effectuant vers un récepteur appartenant à une seconde zone de notifications à laquelle est associé un second service de notifications, chaque service de notifications étant adapté pour notifier des notifications d'une catégorie déterminée à des récepteurs inscrits auprès du service de notifications et/ou pour recueillir des notifications d'une catégorie déterminée auprès des émetteurs enregistrés auprès du service de notifications, caractérisé en ce qu'il comporte les étapes consistant à :
- d'une part inscrire le second service de notifications en tant que récepteur des notifications dudit premier service de notifications et/ou enregistrer le premier service de notifications en tant qu'émetteur des notifications vers le second service de notifications ; et
- d'autre part transmettre ladite notification depuis ledit émetteur jusqu'audit récepteur, successivement au travers du premier service de notifications et du second service de notifications .

Suivant des modes particuliers de mise en oeuvre, le procédé peut comporter l'une ou plusieurs des caractéristiques suivantes :
- l'étape d'inscription du second service de notifications en tant que récepteur des notifications dudit premier service de notifications et/ou d'enregistrement du premier service de notifications en tant qu'émetteur des notifications vers le second service de notifications est effectuée sur requête auprès du premier service de notifications d'un administrateur de service de notifications ;
- l'étape d'inscription du second service de notifications en tant que récepteur des notifications dudit premier service de notifications comporte les étapes successives suivantes :
   . le premier service de notifications adresse un message d'enregistrement au second service de notifications ;
   . le second service de notifications retourne au premier service de notifications un identifiant du second service de notifications ; et
   . le premier service de notifications mémorise ledit identifiant du second service de notifications pour transmettre ultérieurement des notifications vers le second service de notifications ;
- l'étape d'enregistrement du premier service de notifications en tant qu'émetteur des notifications vers le second service de notifications comporte les étapes successives suivantes :
   . le premier service de notifications adresse au second service de notifications un identifiant du premier service de notifications ; et
   . le second service de notifications mémorise ledit identifiant du premier service de notifications pour recueillir ultérieurement des notifications auprès du premier service de notifications ;
- l'étape d'inscription du second service de notifications en tant que récepteur des notifications dudit premier service de notifications et/ou d'enregistrement du premier service de notifications en tant qu'émetteur des notifications vers le second service de notifications est effectuée sur requête auprès du second service de notifications d'un administrateur de service de notifications ;
- l'étape d'inscription du second service de notifications en tant que récepteur des notifications dudit premier service de notifications comporte les étapes successives suivantes :
   . le second service de notifications adresse au premier service de notifications un identifiant du second service de notifications ; et
   . le premier service de notifications mémorise ledit identifiant du second service de notifications pour notifier ultérieurement des notifications auprès du second service de notifications ;
- l'étape d'enregistrement du premier service de notifications en tant qu'émetteur des notifications vers le second service de notifications comporte les étapes successives suivantes :
   . le second service de notifications adresse un message d'inscription au premier service de notifications ;
   . le premier service de notifications retourne au second service de notifications un identifiant du premier service de notifications ; et
   . le second service de notifications mémorise ledit identifiant du premier service de notifications pour recueillir ultérieurement des notifications auprès du premier service de notifications ;
- chaque service de notifications comporte un ensemble de composants logiciels incluant chacun au moins un canal de notifications propre à une catégorie de notifications déterminée et l'étape d'inscription du second service de notifications en tant que récepteur des notifications dudit premier service de notifications s'effectue par mise en oeuvre, par ledit canal de notifications du premier service de notifications correspondant à la catégorie de notifications déterminée, de l'identifiant du canal de notifications associé du second service de notifications, lors de la notification de ladite notification ;
- chaque service de notifications comporte un ensemble de composants logiciels incluant chacun au moins un canal de notifications propre à une catégorie de notifications déterminée et l'étape d'enregistrement du premier service de notifications en tant qu'émetteur des notifications vers le second service de notifications s'effectue par mise en oeuvre, par le canal de notifications du second service de notifications correspondant à la catégorie de notifications déterminée, de l'identifiant du canal de notifications associé du premier service de notifications, lors du recueil de ladite notification ;
- la notification est transmise depuis ledit émetteur vers ledit récepteur à l'initiative dudit émetteur ; et
- la notification est transmise depuis ledit émetteur vers ledit récepteur sur requête dudit récepteur.

En outre, l'invention a pour objet un réseau de traitement d'informations à applications distribuées, comportant d'une part une première zone de notifications à laquelle est associé un premier service de notifications et à laquelle est relié un émetteur, et d'autre part une seconde zone de notifications à laquelle est associé un second service de notifications et à laquelle est relié un récepteur, chaque service de notifications comportant des moyens pour notifier des notifications d'une catégorie déterminée à des récepteurs inscrits auprès du service de notifications et/ou pour recueillir des notifications d'une catégorie déterminée auprès des émetteurs enregistrés auprès du service de notifications, caractérisé en ce qu'il comporte des moyens pour inscrire le second service de notifications en tant que récepteur des notifications dudit premier service de notifications et/ou enregistrer le premier service de notifications en tant qu'émetteur des notifications vers le second service de notifications et des moyens pour transmettre ladite notification depuis ledit émetteur jusqu'audit récepteur, successivement au travers du premier service de notifications et du second service de notifications.

Suivant des modes particuliers de réalisation, le réseau peut comporter l'une ou plusieurs des caractéristiques suivantes :
- il comporte un administrateur de service de notifications adapté pour adresser au premier service de notifications une requête pour l'inscription du second service de notifications en tant que récepteur des notifications dudit premier service de notifications et/ou pour l'enregistrement du premier service de notifications en tant qu'émetteur des notifications vers le second service de notifications ;
- pour l'inscription du second service de notifications en tant que récepteur des notifications dudit premier service de notifications, le premier service de notifications comporte des moyens pour adresser un message d'enregistrement au second service de notifications, le second service de notifications comporte des moyens pour retourner au premier service de notifications un identifiant du second service de notifications, et le premier service de notifications comporte des moyens pour mémoriser ledit identifiant du second service de notifications afin de transmettre ultérieurement des notifications vers le second service de notifications ;
- pour l'enregistrement du premier service de notifications en tant qu'émetteur des notifications vers le second service de notifications, le premier service de notifications comporte des moyens pour adresser au second service de notifications un identifiant du premier service de notifications et le second service de notifications comporte des moyens pour mémoriser ledit identifiant du premier service de notifications afin de recueillir ultérieurement des notifications auprès du premier service de notifications ;
- il comporte un administrateur de service de notifications adapté pour adresser au second service de notifications une requête pour l'inscription du second service de notifications en tant que récepteur des notifications dudit premier service de notifications et/ou pour l'enregistrement du premier service de notifications en tant qu'émetteur des notifications vers le second service de notifications ;
- pour l'inscription du second service de notifications en tant que récepteur des notifications dudit premier service de notifications, le second service de notifications comporte des moyens pour adresser au premier service de notifications un identifiant du second service de notifications et le premier service de notifications comporte des moyens pour mémoriser ledit identifiant du second service de notifications afin de notifier ultérieurement des notifications auprès du second service de notifications ;
- pour l'enregistrement du premier service de notifications en tant qu'émetteur des notifications vers le second service de notifications, le second service de notifications comporte des moyens pour adresser un message d'inscription au premier service de notifications, le premier service de notifications comporte des moyens pour retourner au second service de notifications un identifiant du premier service de notifications et le second service de notifications comporte des moyens pour mémoriser ledit identifiant du premier service de notifications afin de recueillir ultérieurement des notifications auprès du premier service de notifications ;
- chaque service de notifications comporte un ensemble de composants logiciels incluant chacun au moins un canal de notifications propre à une catégorie de notifications déterminée et pour l'inscription du second service de notifications en tant que récepteur des notifications dudit premier service de notifications, ledit canal de notifications du premier service de notifications correspondant à la catégorie de notifications déterminée comporte des moyens de mise en oeuvre de l'identifiant du canal de notifications associé du second service de notifications, lors de la notification de ladite notification ;
- chaque service de notifications comporte un ensemble de composants logiciels incluant chacun au moins un canal de notifications propre à une catégorie de notifications déterminée et pour l'enregistrement du premier service de notifications en tant qu'émetteur des notifications vers le second service de notifications, le canal de notifications du second service de notifications correspondant à la catégorie de notifications déterminée, comporte des moyens de mise en oeuvre de l'identifiant du canal de notifications associé du premier service de notifications, lors du recueil de ladite notification ; et
- l'un au moins parmi les émetteurs et récepteurs est un objet.

L'invention sera mieux comprise à la lecture de la description qui va suivre, donnée uniquement à titre d'exemple et faite en se référant aux dessins, sur lesquels :
- la figure 1 est une vue schématique d'un réseau de traitement d'informations à applications distribuées et orientées objets ;
- la figure 2 est une vue schématique d'un service de notifications explicitant ses principaux organes et son fonctionnement ; et
- les figures 3 et 4 sont des vues schématiques de deux services de notifications fédérés suivant l'invention.

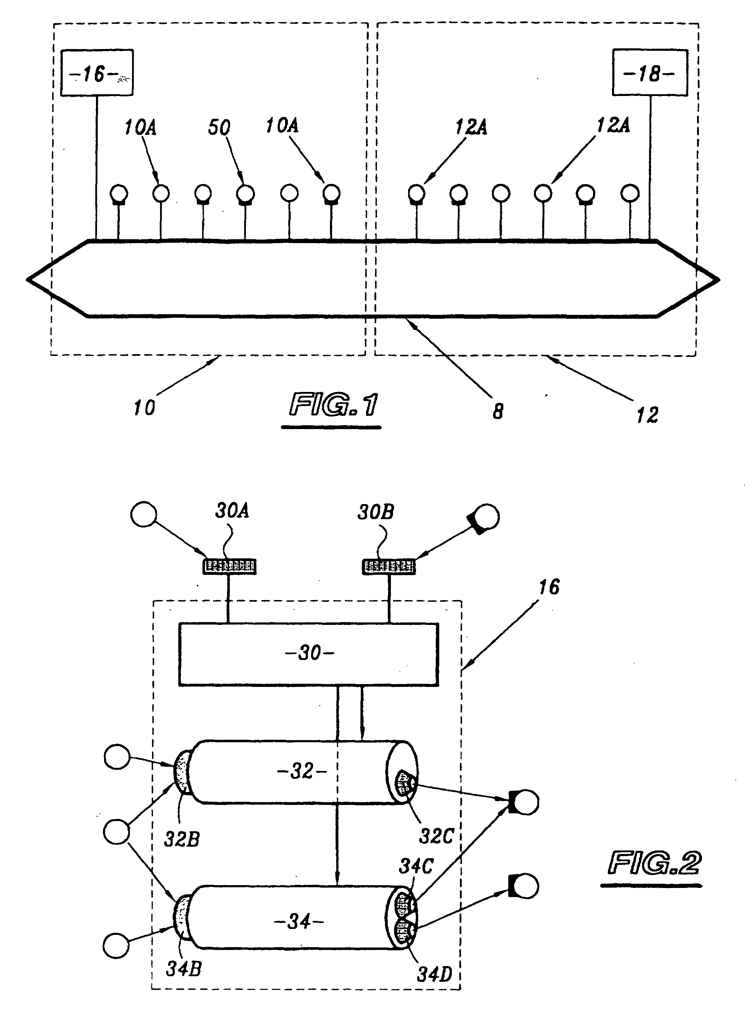

Sur la figure 1 est représenté un bus logiciel 8, séparé en deux zones de notifications distinctes portant les références 10 et 12. Le terme "bus logiciel" désigne l'entité qui permet à des objets d'envoyer et de recevoir des requêtes dans un environnement distribué. Les applications distribuées sont implantées sur des unités de traitement d'informations communiquant entre elles par d'une part le support physique auquel sont connectées les unités de traitement d'informations présentes sur le réseau et d'autre part les couches inférieures du protocole de communication, c'est-à-dire par exemple les couches IP (Internet Protocol) et TCP (Transmission Control Protocol).

Les zones de notifications 10 et 12 sont par exemple des réseaux locaux utilisés sur deux sites distincts d'une même entreprise.

Un premier ensemble d'objets émetteurs et/ou récepteurs 10A est relié au bus logiciel dans la première zone 10. De même, un second ensemble d'objets émetteurs et/ou récepteurs 12A est relié au bus logiciel dans la seconde zone 12. Ces objets sont répartis sur les différentes unités de traitement d'informations du réseau et peuvent être en tout langage. En particulier, ces objets peuvent être pour certains en langage C++ et pour d'autres en langage JAVA.

Sur les figures, les objets sont représentés par des ronds. Les objets récepteurs comportent une interface de communication spécifiée en fonction du bus logiciel utilisé. Cette interface est schématisée par un rectangle noir associé au rond schématisant l'objet.

Pour la mise en oeuvre de l'invention, les émetteurs peuvent ne pas être des objets et être des composants logiciels conventionnels et notamment des programmes procéduraux classiques. Dans ce cas, les références des objets qui forment des identifiants des objets considérés sont remplacées par des identifiants des composants logiciels considérés, des adresses par exemple. Pour la simplicité de la description, il est supposé que les émetteurs sont des objets.

Dans l'exemple décrit, on suppose que les objets émetteurs sont associés à des imprimantes et sont susceptibles d'adresser des notifications concernant l'état de fonctionnement de l'imprimante, notamment sa disponibilité ou son indisponibilité en raison d'une panne. Les objets récepteurs sont supposés être des objets gérant des fonctions d'impression et associés à des stations de travail.

Conformément à la spécification CORBA, l'interface de communication d'un objet est rédigée en IDL (Interface Definition Language). Cette interface IDL permet de définir de manière statique les interfaces des objets permettant le partage d'objets entre différents modèles d'objet.

Après compilation de l'interface IDL, le talon ou souche obtenu est lié à la réalisation de l'objet.

Ainsi, un objet client peut interagir avec un objet serveur éloigné simplement en invoquant les fonctions IDL comme pour un objet local sans se préoccuper de la situation de l'objet serveur sur le réseau. A cet effet, l'objet client peut utiliser pour adresser sa requête le format de l'interface de communication de l'objet serveur.

Deux services de notifications, portant respectivement les références 16 et 18 sont associés respectivement aux zones de notifications 10 et 12.

Un service de notifications est un ensemble d'objets CORBA qui fonctionnent sur le bus logiciel 8. Tous les objets du service de notifications ont une interface de communication IDL. De plus, l'ensemble des objets du réseau quel que soit le bus logiciel auquel ils appartiennent connaissent la référence d'au moins un objet d'accès au service de notifications et éventuellement le format de l'interface IDL de celui-ci.

La figure 2 représente schématiquement à titre d'exemple le service de notifications 16.

Ce service comporte trois objets. Un premier objet est un administrateur de serveur de notifications, portant la référence 30, associé à deux canaux de notifications portant, respectivement, les références 32 et 34. Les canaux de notifications 32 et 34 sont chacun propre à une catégorie de notifications particulière. Dans l'exemple considéré, on suppose que le canal de notifications 32 est propre aux notifications relatives à l'impression en noir et blanc alors que le canal de notifications 34 est propre aux notifications relatives à l'impression en couleur.

L'administrateur de serveur de notifications 30 comporte une interface IDL d'enregistrement d'objets émetteurs utilisant l'administrateur de serveur de notifications. Celle-ci porte la référence 30A. Cette interface est adaptée pour permettre l'enregistrement des objets émetteurs souhaitant émettre des notifications par l'intermédiaire du service de notifications 16. En particulier, l'interface d'enregistrement 30A adresse à un objet émetteur s'enregistrant la référence de l'objet formant le canal de notifications auprès duquel l'objet émetteur souhaite être enregistré afin de pouvoir diffuser des notifications par son intermédiaire.

De même, l'administrateur de serveur de notifications 30 comporte une interface 30B d'inscription d'objets récepteurs. Cette interface IDL est adaptée pour l'inscription des objets reliés au bus logiciel associé afin que ces objets reçoivent les notifications issues du service de notifications pour lesquelles ils sont inscrits.

L'inscription se fait notamment en fournissant à l'administrateur de serveur de notifications 30 la référence de l'objet récepteur inscrit.

Chaque canal de notifications 32, 34, formant un objet CORBA est commandé par l'administrateur de serveur de notifications 30. En particulier, l'administrateur de serveur de notifications 30 assure l'inscription des objets récepteurs auprès de chacun des canaux de notifications correspondant à la catégorie de notifications dont l'objet récepteur considéré souhaite être destinataire en fournissant leur référence au canal de notifications concerné.

Chaque canal de notifications comporte par ailleurs une interface d'entrée de canal de notifications, notée 32B, 34B. Ces interfaces de communication, rédigées en IDL, sont adaptées pour recevoir directement les notifications des objets émetteurs envoyant une notification vers les objets récepteurs. A cet effet, les objets émetteurs adressent leur requête à l'interface d'entrée de canal de notifications en utilisant la référence propre au canal. Cette référence est indiquée à chaque objet émetteur par l'administrateur de serveur de notifications 30 lors de l'enregistrement de l'objet émetteur.

Chaque canal de notifications comporte en outre un ou plusieurs filtres, notés respectivement 32C pour le canal 32 et 34C, 34D pour le canal 34. Ces filtres correspondent chacun à un objet récepteur auquel doit être adressée une notification et définissent les critères de test auxquels doivent satisfaire les notifications pour être transmises.

Chaque canal de notifications connaît en outre la référence de l'objet récepteur auquel doit être adressée la notification. La référence de l'objet lui est communiquée lors de l'inscription de l'objet récepteur auprès de l'administrateur de serveur de notifications 30.

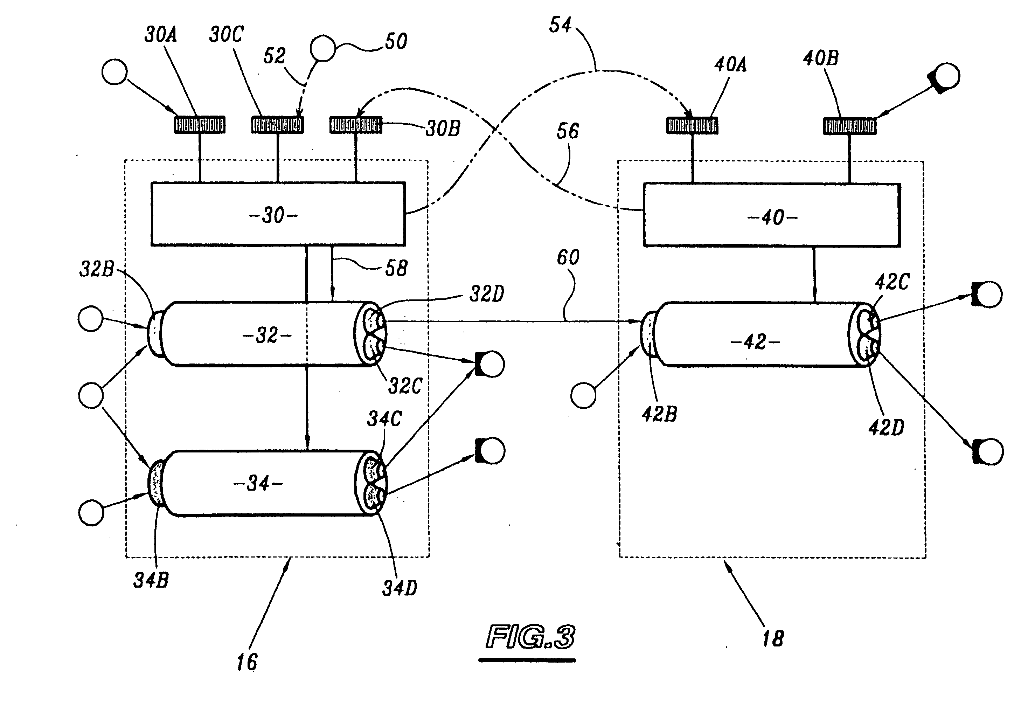

Sur la figure 3 sont représentés cote à cote les deux services de notifications 16 et 18.

Le service de notifications 18 comporte un premier objet 40 formant un administrateur de serveur de notifications, dont les fonctions sont analogues à celles de l'administrateur de serveur de notifications 30. Il comporte en outre un unique objet 42 formant un canal de notifications. Le canal de notifications 42 est, dans l'exemple décrit ici, spécifiquement adapté à la transmission de notifications relatives à l'impression en noir et blanc. Il est donc l'homologue du canal de notifications 32 pour la seconde zone de notifications 12. Les autres éléments du service de notifications 18, qui correspondent aux éléments du service de notifications 16, sont désignés par les mêmes numéros de référence auxquels il a été ajouté 10.

Selon l'invention, afin de permettre la transmission d'une notification depuis un objet émetteur de la première zone de notifications 10 vers un objet récepteur de la seconde zone de notifications 12, on réalise une fédération des services de notifications 16 et 18.

A cet effet, le second service de notifications 18 est inscrit auprès du premier service de notifications 16 en tant qu'objet récepteur des informations émises depuis le canal de notifications 32. Pour ce faire, un objet 50, formant un administrateur de service de notifications, est prévu sur le bus logiciel dans la première zone 10. L'administrateur de service de notifications 50 est adapté pour envoyer une requête de fédération vers le service de notifications 16.

A cet effet, l'administrateur de serveur de notifications 30 comporte une interface IDL supplémentaire 30C, dite interface de fédération, dont le format est connu de l'administrateur 50. Dans la pratique, les interfaces IDL 30A, 30B, 30C sont regroupées dans un même talon associé à l'administrateur de serveur de notifications 30. En outre, l'administrateur de service de notifications 50 connaît la référence de l'administrateur de serveur de notifications 30.

La fédération des deux services de notifications s'effectue de la façon suivante.

L'administrateur de service de notifications 50 adresse une requête de fédération à l'administrateur de serveur de notifications 30 par l'interface 30C comme schématisé par la flèche 52.

L'administrateur de serveur de notifications 30 adresse alors une requête, schématisée par la flèche 54, auprès de l'administrateur de serveur de notifications 40 afin que le canal de notifications 32 soit enregistré en tant qu'objet émetteur vers le canal de notifications 42. En retour, l'administrateur de serveur de notifications 40 adresse à l'administrateur de serveur de notifications 30, par l'intermédiaire de son interface d'inscription 30B, une requête, schématisée par la flèche 56, contenant la référence du canal de notifications 42.

Grâce à la connaissance de la référence du canal 42, l'administrateur de serveur de notifications 30 commande le canal 32 comme schématisé par la flèche 58 en vue de la mémorisation de cette référence. Le canal de notifications 42 est ainsi mémorisé par le canal 32 en tant que récepteur. La mise en oeuvre de cette référence par le canal 32 assure ensuite l'envoi des notifications vers le canal de notifications 42 par l'intermédiaire de l'interface d'entrée 42B. Un tel envoi est schématisé par la flèche 60.

On conçoit que, dans ces conditions, lorsqu'un objet émetteur de la première zone 10 du bus logiciel adresse une notification au service de notifications 16 et que l'administrateur de service de notifications 50 a indiqué que cette notification devait être adressée aux objets récepteurs présents dans la seconde zone 12, la notification transite depuis le canal de notifications 32 vers le canal de notifications 42 puis jusqu'aux objets récepteurs de la seconde zone de notifications 12.

En conséquence, les objets récepteurs de la seconde zone peuvent recevoir une ou plusieurs notifications adressées au premier service de notifications 16 sans avoir été inscrits eux-mêmes auprès de celui-ci.

Dans l'exemple décrit ici, l'administrateur de service de notifications 50 établit la fédération des premier et second services de notifications 16, 18 en ce qui concerne leurs canaux de notifications relatifs à l'impression en noir et blanc. Il s'assure ainsi que les stations de travail installées dans la seconde zone 12 reçoivent les informations relatives à l'état de fonctionnement des imprimantes présentes dans la première zone 10. Une telle fédération est particulièrement indiquée lorsque l'ensemble des imprimantes en noir et blanc présentes dans la seconde zone 12 sont hors service. Ainsi, les utilisateurs peuvent utiliser une imprimante de la première zone 10 dont ils connaissent l'état.

Dans un tel cas, la fédération des services de notifications permet de n'adresser certaines notifications à des objets récepteurs qu'en cas de nécessité absolue, le gestionnaire de réseau évaluant les circonstances nécessitant une telle fédération.

Ainsi, quelle que soit la taille du réseau, le nombre d'objets émetteurs/récepteurs associé à chaque service de notifications est limité, ce qui évite l'engorgement de ces services. Il est cependant possible d'adresser une notification à un grand nombre d'objets même si ceux-ci ne sont inscrits qu'auprès d'un service de notifications.

En conséquence, il n'est plus nécessaire que les objets récepteurs s'inscrivent individuellement auprès de plusieurs services de notifications.

Par ailleurs, bien que l'exemple exposé ici soit relatif à un réseau mettant en oeuvre des stations de travail et des imprimantes, un tel procédé peut être utilisé pour un réseau de télécommunication comportant plusieurs autocommutateurs, les objets étant dédiés au suivi de l'état de fonctionnement des autocommutateurs.

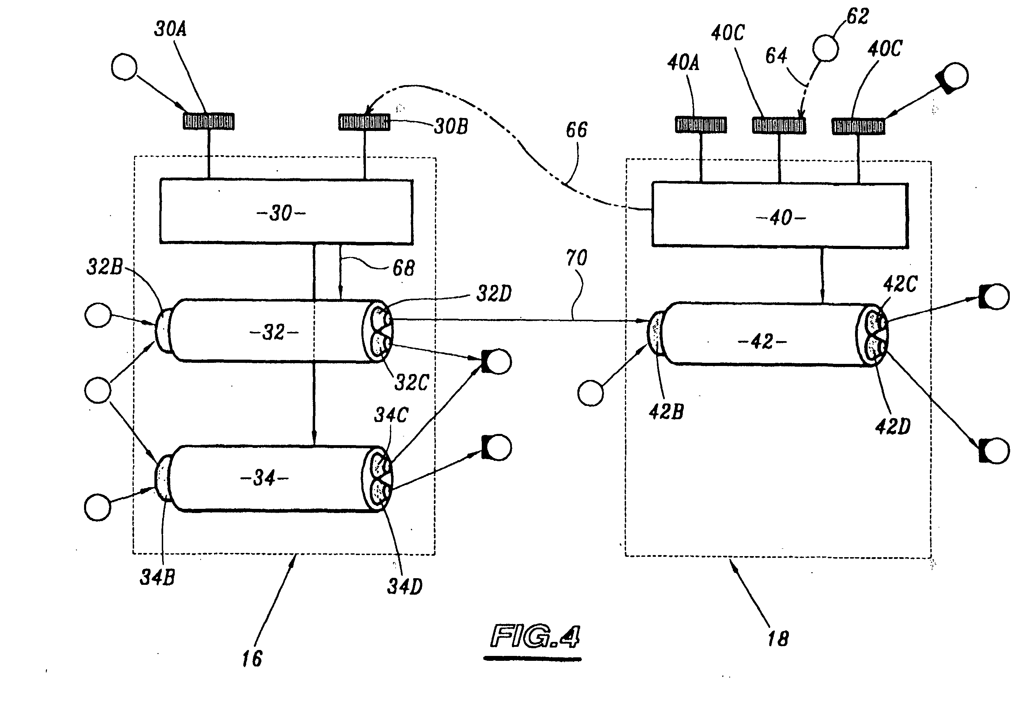

Sur la figure 4 est schématisée une variante de fédération des deux services de notifications 16 et 18.

Dans cette variante, l'administrateur de serveur de notifications 30 est dépourvu d'interface de fédération. En revanche, l'administrateur de serveur de notifications 40 comporte une interface de fédération notée 40C.

En outre, l'administrateur de service de notifications noté 62 dans cet exemple est adapté pour envoyer une requête de fédération vers le second service de notifications 18, par l'intermédiaire de l'interface de fédération 40C. L'administrateur 62 est présent dans la seconde zone de notifications 12. Il connaît la référence de l'administrateur de serveur de notifications 40, afin d'adresser la requête de fédération vers l'interface de fédération 40C.

Dans cette variante de mise en oeuvre, la fédération de deux services de notifications s'effectue de la façon suivante.

L'administrateur de service de notifications 62 adresse une requête de fédération à l'administrateur de serveur de notifications 40 par l'interface 40C, comme schématisé par la flèche 64. L'administrateur de serveur de notifications 40 adresse alors une requête, schématisée par la flèche 66 auprès de l'administrateur de serveur de notifications 30 par l'intermédiaire de son interface 30B afin que le canal de notifications 42 soit inscrit en tant qu'objet récepteur des notifications du canal 32. A cet effet, l'administrateur de serveur de notifications 40 adresse la référence du canal de notifications 42. L'administrateur de serveur de notifications 30 commande le canal 32, comme schématisé par la flèche 68, en vue du stockage du canal de notifications 42 en tant qu'objet récepteur des notifications.

Comme expliqué précédemment, l'inscription du canal de notifications 42 en tant qu'objet récepteur des notifications émises par le canal de notifications 32 assure l'envoi, comme schématisé par la flèche 70, des notifications du canal 32 vers le canal 42, et ainsi l'émission des notifications vers les objets récepteurs inscrits auprès du canal de notifications 42.

Quel que soit le mode de mise en oeuvre du procédé de fédération, lors du fonctionnement des services de notifications fédérés, la notification peut être transmise à l'initiative de l'objet émetteur ou de l'objet récepteur.

En particulier, lorsque la communication s'effectue suivant un "modèle poussé" (push model), la notification est transmise depuis l'objet émetteur vers l'objet récepteur au travers successivement des premier et second services de notifications à l'initiative de l'objet émetteur.

Au contraire, lorsque la communication s'établit suivant un "modèle tiré" (pull model), la notification est transmise depuis l'objet émetteur vers l'objet récepteur au travers successivement du premier service de notifications et du second service de notifications sur requête du récepteur adressant une interrogation au second service de notifications lequel la répercute au premier service de notifications puis à l'objet émetteur.

Dans ce dernier cas, afin de réaliser la fédération des deux services de notifications, le premier service de notifications est enregistré auprès du second service de notifications en tant qu'objet émetteur susceptible de lui adresser des notifications. Ainsi, le second service de notifications mémorise la référence ou l'identifiant du premier service de notifications. Le second service de notifications peut ainsi recueillir auprès du premier service de notifications, grâce à cet identifiant, des notifications dont le contenu correspond aux réponses aux messages d'interrogation qu'il reçoit.

Le mécanisme d'enregistrement en tant qu'émetteur s'effectue de manière analogue au mécanisme d'inscription des services de notifications en tant que récepteurs, comme exposé plus haut.

En particulier, lorsque l'administrateur de service de notifications est adapté pour adresser des requêtes de fédération auprès du premier service de notifications 16, l'enregistrement du premier service de notifications 16 en tant qu'émetteur des notifications vers le second service de notifications 18 comporte d'abord une étape consistant en ce que le premier service de notifications 16 adresse au second service de notifications 18 un identifiant du premier service de notifications et ensuite une étape consistant en ce que le second service de notifications 18 mémorise l'identifiant du premier service de notifications 16 pour recueillir ultérieurement des notifications auprès du premier service de notifications.

En outre, lorsque l'administrateur de service de notifications est adapté pour adresser des requêtes de fédération auprès du second service de notifications 18, l'étape d'enregistrement du premier service de notifications en tant qu'émetteur des notifications vers le second service de notifications comporte les étapes successives consistant d'abord en ce que le second service de notifications 18 adresse un message d'inscription au premier service de notifications 16, en ce que, ensuite, le premier service de notifications 16 retourne au second service de notifications 18 un identifiant du premier service de notifications et enfin en ce que le second service de notifications 18 mémorise l'identifiant du premier service de notifications 16 pour recueillir ultérieurement des notifications auprès du premier service de notifications 16.

Dans les deux cas, ces étapes sont mises en oeuvre depuis les objets formant administrateurs de serveur de notifications 30, 40 et les canaux de notifications 32, 34, 42, de manière analogue aux étapes décrites concernant l'inscription du second service de notifications en tant que récepteur des notifications émises par le premier service de notifications. Aussi, ces étapes ne seront pas décrites plus en détail.

De tels procédé et réseau de transmission peuvent être mis en oeuvre indépendamment de la spécification CORBA. En particulier, ceux-ci peuvent être utilisés avec le protocole DCOM ou le protocole RMI.

## Revendications

1. Procédé de transmission d'une notification dans un réseau de traitement d'informations à applications distribuées, depuis un émetteur (10A) appartenant à une première zone de notifications (10) à laquelle est associé un premier service de notifications (16), la transmission s'effectuant vers un récepteur (12A) appartenant à une seconde zone de notifications (12) à laquelle est associé un second service de notifications (18), chaque service de notifications étant adapté pour notifier des notifications d'une catégorie déterminée à des récepteurs inscrits auprès du service de notifications et/ou pour recueillir des notifications d'une catégorie déterminée auprès des émetteurs enregistrés auprès du service de notifications, **caractérisé en ce qu'**il comporte les étapes consistant à :
- d'une part inscrire le second service de notifications (18) en tant que récepteur des notifications dudit premier service de notifications (16) et/ou enregistrer le premier service de notifications (16) en tant qu'émetteur des notifications vers le second service de notifications (18) ; et
- d'autre part transmettre ladite notification depuis ledit émetteur (10A) jusqu'audit récepteur (12A), successivement au travers du premier service de notifications (16) et du second service de notifications (18).

2. Procédé selon la revendication 1, **caractérisé en ce que** l'étape d'inscription du second service de notifications (18) en tant que récepteur des notifications dudit premier service de notifications (16) et/ou d'enregistrement du premier service de notifications (16) en tant qu'émetteur des notifications vers le second service de notifications (18) est effectuée sur requête auprès du premier service de notifications (16) d'un administrateur de service de notifications (50).

3. Procédé selon la revendication 2, **caractérisé en ce que** l'étape d'inscription du second service de notifications (18) en tant que récepteur des notifications dudit premier service de notifications (16) comporte les étapes successives suivantes :
- le premier service de notifications (16) adresse un message d'enregistrement au second service de notifications (18) ;
- le second service de notifications (18) retourne au premier service de notifications (16) un identifiant du second service de notifications (18) ; et
- le premier service de notifications (16) mémorise ledit identifiant du second service de notifications pour transmettre ultérieurement des notifications vers le second service de notifications (18).

4. Procédé selon la revendication 2 ou 3, **caractérisé en ce que** l'étape d'enregistrement du premier service de notifications (16) en tant qu'émetteur des notifications vers le second service de notifications (18) comporte les étapes successives suivantes :
- le premier service de notifications (16) adresse au second service de notifications (18) un identifiant du premier service de notifications (16); et
- le second service de notifications (18) mémorise ledit identifiant du premier service de notifications (16) pour recueillir ultérieurement des notifications auprès du premier service de notifications (16).

5. Procédé selon la revendication 1, **caractérisé en ce que** l'étape d'inscription du second service de notifications (18) en tant que récepteur des notifications dudit premier service de notifications (16) et/ou d'enregistrement du premier service de notifications (16) en tant qu'émetteur des notifications vers le second service de notifications (18) est effectuée sur requête auprès du second service de notifications (18) d'un administrateur de service de notifications (62).

6. Procédé selon la revendication 5, **caractérisé en ce que** l'étape d'inscription du second service de notifications (18) en tant que récepteur des notifications dudit premier service de notifications (16) comporte les étapes successives suivantes :
- le second service de notifications (18) adresse au premier service de notifications (16) un identifiant du second service de notifications (18) ; et
- le premier service de notifications (16) mémorise ledit identifiant du second service de notifications pour notifier ultérieurement des notifications auprès du second service de notifications.

7. Procédé selon la revendications 5 ou 6, **caractérisé en ce que** l'étape d'enregistrement du premier service de notifications (16) en tant qu'émetteur des notifications vers le second service de notifications (18) comporte les étapes successives suivantes :
- le second service de notifications (18) adresse un message d'inscription au premier service de notifications (16) ;
- le premier service de notifications (16) retourne au second service de notifications (18) un identifiant du premier service de notifications (16) ; et
- le second service de notifications (18) mémorise ledit identifiant du premier service de notifications (16) pour recueillir ultérieurement des notifications auprès du premier service de notifications (16).

8. Procédé selon la revendication 3 ou 6, **caractérisé en ce que** chaque service de notifications (16, 18) comporte un ensemble de composants logiciels (30, 32, 34, 40, 42) incluant chacun au moins un canal de notifications (32, 34, 40) propre à une catégorie de notifications déterminée et **en ce que** l'étape d'inscription du second service de notifications (18) en tant que récepteur des notifications dudit premier service de notifications (16) s'effectue par mise en oeuvre, par ledit canal de notifications (32) du premier service de notifications (16) correspondant à la catégorie de notifications déterminée, de l'identifiant du canal de notifications (42) associé du second service de notifications (18), lors de la notification de ladite notification.

9. Procédé selon la revendication 4 ou 7, **caractérisé en ce que** chaque service de notifications (16, 18) comporte un ensemble de composants logiciels (30, 32, 34, 40, 42) incluant chacun au moins un canal de notifications (32, 34, 40) propre à une catégorie de notifications déterminée et **en ce que** l'étape d'enregistrement du premier service de notifications (16) en tant qu'émetteur des notifications vers le second service de notifications (18) s'effectue par mise en oeuvre, par le canal de notifications (42) du second service de notifications (18) correspondant à la catégorie de notifications déterminée, de l'identifiant du canal de notifications (32) associé du premier service de notifications (16), lors du recueil de ladite notification.

10. Procédé selon l'une quelconque des revendications précédentes, **caractérisé en ce que** la notification est transmise depuis ledit émetteur (10A) vers ledit récepteur (12A) à l'initiative dudit émetteur (10A).

11. Procédé selon l'une quelconque des revendications 1 à 9, **caractérisé en ce que** la notification est transmise depuis ledit émetteur (10A) vers ledit récepteur (12A) sur requête dudit récepteur (12A).

12. Réseau de traitement d'informations à applications distribuées, comportant d'une part une première zone de notifications (10) à laquelle est associé un premier service de notifications (16) et à laquelle est relié un émetteur (10A), et d'autre part une seconde zone de notifications (12) à laquelle est associé un second service de notifications (18) et à laquelle est relié un récepteur (12A), chaque service de notifications comportant des moyens pour notifier des notifications d'une catégorie déterminée à des récepteurs inscrits auprès du service de notifications et/ou pour recueillir des notifications d'une catégorie déterminée auprès des émetteurs enregistrés auprès du service de notifications, **caractérisé en ce qu'**il comporte des moyens pour inscrire le second service de notifications (18) en tant que récepteur des notifications dudit premier service de notifications (16) et/ou enregistrer le premier service de notifications (16) en tant qu'émetteur des notifications vers le second service de notifications (18) et des moyens pour transmettre ladite notification depuis ledit émetteur (10A) jusqu'audit récepteur (12A), successivement au travers du premier service de notifications (16) et du second service de notifications (18).

13. Réseau selon la revendication 12, **caractérisé en ce qu'**il comporte un administrateur de service de notifications (50) adapté pour adresser au premier service de notifications (16) une requête pour l'inscription du second service de notifications (18) en tant que récepteur des notifications dudit premier service de notifications (16) et/ou pour l'enregistrement du premier service de notifications (16) en tant qu'émetteur des notifications vers le second service de notifications (18).

14. Réseau selon la revendication 13, **caractérisé en ce que** pour l'inscription du second service de notifications (18) en tant que récepteur des notifications dudit premier service de notifications (16), le premier service de notifications (16) comporte des moyens pour adresser un message d'enregistrement au second service de notifications (18), le second service de notifications (18) comporte des moyens pour retourner au premier service de notifications (16) un identifiant du second service de notifications (18), et le premier service de notifications (16) comporte des moyens pour mémoriser ledit identifiant du second service de notifications afin de transmettre ultérieurement des notifications vers le second service de notifications (18).

15. Réseau selon la revendication 13 ou 14, **caractérisé en ce que** pour l'enregistrement du premier service de notifications (16) en tant qu'émetteur des notifications vers le second service de notifications (18), le premier service de notifications (16) comporte des moyens pour adresser au second service de notifications (18) un identifiant du premier service de notifications (16) et le second service de notifications (18) comporte des moyens pour mémoriser ledit identifiant du premier service de notifications (16) afin de recueillir ultérieurement des notifications auprès du premier service de notifications (16).

16. Réseau selon la revendication 12, **caractérisé en ce qu'**il comporte un administrateur de service de notifications (62) adapté pour adresser au second service de notifications (18) une requête pour l'inscription du second service de notifications (18) en tant que récepteur des notifications dudit premier service de notifications (16) et/ou pour l'enregistrement du premier service de notifications (16) en tant qu'émetteur des notifications vers le second service de notifications (18).

17. Réseau selon la revendication 16, **caractérisé en ce que** pour l'inscription du second service de notifications (18) en tant que récepteur des notifications dudit premier service de notifications (16), le second service de notifications (18) comporte des moyens pour adresser au premier service de notifications (16) un identifiant du second service de notifications (18) et le premier service de notifications (16) comporte des moyens pour mémoriser ledit identifiant du second service de notifications afin de notifier ultérieurement des notifications auprès du second service de notifications.

18. Réseau selon la revendications 16 ou 17, **caractérisé en ce que** pour l'enregistrement du premier service de notifications (16) en tant qu'émetteur des notifications vers le second service de notifications (18), le second service de notifications (18) comporte des moyens pour adresser un message d'inscription au premier service de notifications (16), le premier service de notifications (16) comporte des moyens pour retourner au second service de notifications (18) un identifiant du premier service de notifications (16) et le second service de notifications (18) comporte des moyens pour mémoriser ledit identifiant du premier service de notifications (16) afin de recueillir ultérieurement des notifications auprès du premier service de notifications (16).

19. Réseau selon la revendication 14 ou 17, **caractérisé en ce que** chaque service de notifications (16, 18) comporte un ensemble de composants logiciels (30, 32, 34, 40, 42) incluant chacun au moins un canal de notifications (32, 34, 40) propre à une catégorie de notifications déterminée et **en ce que** pour l'inscription du second service de notifications (18) en tant que récepteur des notifications dudit premier service de notifications (16), ledit canal de notifications (32) du premier service de notifications (16) correspondant à la catégorie de notifications déterminée comporte des moyens de mise en oeuvre de l'identifiant du canal de notifications (42) associé du second service de notifications (18), lors de la notification de ladite notification.

20. Réseau selon la revendication 15 ou 18, **caractérisé en ce que** chaque service de notifications (16, 18) comporte un ensemble de composants logiciels (30, 32, 34, 40, 42) incluant chacun au moins un canal de notifications (32, 34, 40) propre à une catégorie de notifications déterminée et **en ce que** pour l'enregistrement du premier service de notifications (16) en tant qu'émetteur des notifications vers le second service de notifications (18), le canal de notifications (42) du second service de notifications (18) correspondant à la catégorie de notifications déterminée, comporte des moyens de mise en oeuvre de l'identifiant du canal de notifications (32) associé du premier service de notifications (16), lors du recueil de ladite notification.

21. Réseau selon l'une quelconque des revendications 12 à 20, **caractérisé en ce que** l'un au moins parmi les émetteurs et récepteurs est un objet.

## Patentansprüche

1. Verfahren zur Übertragung einer Mitteilung in einem Datenverarbeitungsnetz mit verteilten Anwendungen von einem Sender (10A) aus, der zu einer ersten Mitteilungszone (10) gehört, welcher ein erster Mitteilungsdienst (16) zugeordnet ist, wobei die Übertragung zu einem Empfänger (12A) erfolgt, der zu einer zweiten Mitteilungszone (12) gehört, welcher ein zweiter Mitteilungsdienst (18) zugeordnet ist, wobei jeder Mitteilungsdienst dafür ausgelegt ist, Mitteilungen einer festgelegten Kategorie an Empfänger zu übermitteln, die beim Mitteilungsdienst registriert sind, und/oder Mitteilungen einer festgelegten Kategorie von Empfängern entgegenzunehmen, die beim Mitteilungsdienst registriert sind, **dadurch gekennzeichnet, daß** es die Schritte beinhaltet,
- einerseits den zweiten Mitteilungsdienst (18) als Empfänger der Mitteilungen des besagten ersten Mitteilungsdienstes (16) anzumelden und/oder den ersten Mitteilungsdienst (16) als Sender der Mitteilungen zum besagten zweiten Mitteilungsdienst (18) zu registrieren, und
- andererseits die besagte Mitteilung vom besagten Sender (10A) nacheinander über den ersten Mitteilungsdienst (16) und den zweiten Mitteilungsdienst (18) zum besagten Empfänger (12A) zu übertragen.

2. Verfahren gemäß Anspruch 1, **dadurch gekennzeichnet, daß** der Schritt der Anmeldung des zweiten Mitteilungsdienstes (18) als Empfänger der Mitteilungen des besagten ersten Mitteilungsdienstes (16) und/oder der Registrierung des ersten Mitteilungsdienstes (16) als Sender der Mitteilungen zum besagten zweiten Mitteilungsdienst (18) auf Anforderung eines Mitteilungsdienst-Administrators (50) beim ersten Mitteilungsdienst (16) ausgeführt wird.

3. Verfahren gemäß Anspruch 2, **dadurch gekennzeichnet, daß** der Schritt der Anmeldung des zweiten Mitteilungsdienstes (18) als Empfänger der Mitteilungen des besagten ersten Mitteilungsdienstes (16) nacheinander die folgenden Schritte beinhaltet:
- Der erste Mitteilungsdienst (16) schickt eine Registrierungsmeldung an den zweiten Mitteilungsdienst (18),
- der zweite Mitteilungsdienst (18) schickt einen Identifier des zweiten Mitteilungsdienstes (18) zurück an den ersten Mitteilungsdienst (16), und
- der erste Mitteilungsdienst (16) speichert den besagten Identifier des zweiten Mitteilungsdienstes, um danach Mitteilungen an den zweiten Mitteilungsdienst (18) zu übertragen.

4. Verfahren gemäß einem oder beiden der Ansprüche 2 und 3, **dadurch gekennzeichnet, daß** der Schritt der Registrierung des ersten Mitteilungsdienstes (16) als Empfänger der Mitteilungen an den zweiten Mitteilungsdienst (18) nacheinander die folgenden Schritte beinhaltet:
- Der erste Mitteilungsdienst (16) schickt einen Identifier des ersten Mitteilungsdienstes (16) an den zweiten Mitteilungsdienst (18), und
- der zweite Mitteilungsdienst (18) speichert den besagten Identifier des ersten Mitteilungsdienstes (16), um danach Mitteilungen beim ersten Mitteilungsdienst (16) entgegenzunehmen.

5. Verfahren gemäß Anspruch 1, **dadurch gekennzeichnet, daß** der Schritt der Anmeldung des zweiten Mitteilungsdienstes (18) als Empfänger der Mitteilungen des besagten ersten Mitteilungsdienstes (16) und/oder der Registrierung des ersten Mitteilungsdienstes (16) als Sender der Mitteilungen an den zweiten Mitteilungsdienst (18) auf Anforderung eines Mitteilungsdienst-Administrators (62) gegenüber dem zweiten Mitteilungsdienst (18) ausgeführt wird.

6. Verfahren gemäß Anspruch 5, **dadurch gekennzeichnet, daß** der Schritt der Anmeldung des zweiten Mitteilungsdienstes (18) als Empfänger der Mitteilungen des besagten ersten Mitteilungsdienstes (16) nacheinander die folgenden Schritte beinhaltet:
- Der zweite Mitteilungsdienst (18) schickt einen Identifier des zweiten Mitteilungsdienstes (18) an den ersten Mitteilungsdienst (16), und
- der erste Mitteilungsdienst (16) speichert den besagten Identifier des zweiten Mitteilungsdienstes, um danach Mitteilungen an den zweiten Mitteilungsdienst zu übermitteln.

7. Verfahren gemäß Anspruch 5 oder 6, **dadurch gekennzeichnet, daß** der Schritt der Registrierung des ersten Mitteilungsdienstes (16) als Sender der Mitteilungen an den zweiten Mitteilungsdienst (18) nacheinander die folgenden Schritte beinhaltet:
- Der zweite Mitteilungsdienst (18) schickt eine Anmeldungsmeldung an den ersten Mitteilungsdienst (16),
- der erste Mitteilungsdienst (16) schickt einen Identifier des ersten Mitteilungsdienstes (16) an den zweiten Mitteilungsdienst (18), und
- der zweite Mitteilungsdienst (18) speichert den besagten Identifier des ersten Mitteilungsdienstes (16), um danach Mitteilungen beim ersten Mitteilungsdienst (16) entgegenzunehmen.

8. Verfahren gemäß Anspruch 3 oder 6, **dadurch gekennzeichnet, daß** jeder Mitteilungsdienst (16, 18) eine Gruppe von Softwarekomponenten (30, 32, 34, 40, 42) beinhaltet, die jeweils mindestens einen Mitteilungskanal (32, 34, 40) enthalten, der einer festgelegten Mitteilungskategorie zugehörig ist, sowie dadurch, daß der Schritt der Anmeldung des zweiten Mitteilungsdienstes (18) als Empfänger der Mitteilungen des besagten ersten Mitteilungsdienstes (16) durch Verwendung des Identifiers des Mitteilungskanals (42), welcher dem zweiten Mitteilungsdienst (18) zugeordnet ist, über den besagten Mitteilungskanal (32) des ersten Mitteilungsdienstes (16) entsprechend der festgelegten Mitteilungskategorie bei der Übermittlung der besagten Mitteilung erfolgt.

9. Verfahren gemäß Anspruch 4 oder 7, **dadurch gekennzeichnet, daß** jeder Mitteilungsdienst (16, 18) eine Gruppe von Softwarekomponenten (30, 32, 34, 40, 42) beinhaltet, die jeweils mindestens einen Mitteilungskanal (32, 34, 40) enthalten, der einer festgelegten Mitteilungskategorie zugehörig ist, sowie dadurch, daß der Schritt der Anmeldung des ersten Mitteilungsdienstes (16) als Sender der Mitteilungen an den besagten zweiten Mitteilungsdienst (18) durch Verwendung des Identifiers des Mitteilungskanals (32), welcher dem ersten Mitteilungsdienst (16) zugeordnet ist, über den Mitteilungskanal (42) des zweiten Mitteilungsdienstes (18) entsprechend der festgelegten Mitteilungskategorie bei der Entgegennahme der besagten Mitteilung erfolgt.

10. Verfahren gemäß einem oder mehreren der vorgenannten Ansprüche, **dadurch gekennzeichnet, daß** die Mitteilung vom besagten Sender (10A) zum besagten Empfänger (12A) auf Initiative des besagten Senders (10A) übertragen wird.

11. Verfahren gemäß einem oder mehreren der Ansprüche 1 bis 9, **dadurch gekennzeichnet, daß** die Mitteilung vom besagten Sender (10A) zum besagten Empfänger (12A) auf Anforderung des besagten Empfängers (12A) übertragen wird.

12. Datenverarbeitungsnetz mit verteilten Anwendungen, beinhaltend einerseits eine erste Mitteilungszone (10), welcher ein erster Mitteilungsdienst (16) zugeordnet und mit welcher ein Sender (10A) verbunden ist, und andererseits eine zweite Mitteilungszone (12), welcher ein zweiter Mitteilungsdienst (18) zugeordnet und mit welcher ein Empfänger (12A) verbunden ist, wobei jeder Mitteilungsdienst Vorrichtungen zur Übermittlung von Mitteilungen einer festgelegten Kategorie an Empfänger, die beim Mitteilungsdienst angemeldet sind, und/oder Vorrichtungen zur Entgegennahme von Mitteilungen einer festgelegten Kategorie von Sendern beinhaltet, die beim Mitteilungsdienst registriert sind, **dadurch gekennzeichnet, daß** es Vorrichtungen zum Anmelden des zweiten Mitteilungsdienstes (18) als Empfänger der Mitteilungen des besagten ersten Mitteilungsdienstes (16) und/oder zum Registrieren des ersten Mitteilungsdienstes (16) als Sender der Mitteilungen an den zweiten Mitteilungsdienst (18) sowie Vorrichtungen beinhaltet, um die besagte Mitteilung sukzessiv über den ersten Mitteilungsdienst (16) und den zweiten Mitteilungsdienst (18) vom besagten Sender (10A) zum besagten Empfänger (12A) zu übertragen.

13. Netzwerk gemäß Anspruch 12, **dadurch gekennzeichnet, daß** dieses einen Mitteilungsdienst-Administrator (50) beinhaltet, der dafür ausgelegt ist, an den ersten Mitteilungsdienst (16) eine Anforderung zur Anmeldung des zweiten Mitteilungsdienstes (18) als Empfänger der Mitteilungen des besagten ersten Mitteilungsdienstes (16) und/oder zur Registrierung des ersten Mitteilungsdienstes (16) als Sender der Mitteilungen an den zweiten Mitteilungsdienst (18) zu schicken.

14. Netzwerk gemäß Anspruch 13, **dadurch gekennzeichnet, daß** der erste Mitteilungsdienst (16) für die Anmeldung des zweiten Mitteilungsdienstes (18) als Empfänger der Mitteilungen des besagten ersten Mitteilungsdienstes (16) Vorrichtungen beinhaltet, um eine Registrierungsmeldung an den zweiten Mitteilungsdienst (18) zu schicken, während der zweite Mitteilungsdienst (18) Vorrichtungen beinhaltet, um einen Identifier des zweiten Mitteilungsdienstes (18) an den ersten Mitteilungsdienst (16) zurückzuschicken, und der erste Mitteilungsdienst (16) Vorrichtungen beinhaltet, um den besagten Identifier des zweiten Mitteilungsdienstes (18) zu speichern und danach Mitteilungen an den zweiten Mitteilungsdienst (18) zu übermitteln.

15. Netzwerk gemäß Anspruch 13 oder 14, **dadurch gekennzeichnet, daß** der erste Mitteilungsdienst (16) für die Registrierung des ersten Mitteilungsdienstes (16) als Sender der Mitteilungen an den zweiten Mitteilungsdienst Vorrichtungen beinhaltet, um an den zweiten Mitteilungsdienst (18) einen Identifier des ersten Mitteilungsdienstes (16) zu schicken, und daß der zweite Mitteilungsdienst (18) Vorrichtungen beinhaltet, um den besagten Identifier des ersten Mitteilungsdienstes (16) zu speichern und danach Mitteilungen vom ersten Mitteilungsdienst (16) entgegenzunehmen.

16. Netzwerk gemäß Anspruch 12, **dadurch gekennzeichnet, daß** dieses einen Mitteilungsdienst-Administrator (62) beinhaltet, der dafür ausgelegt ist, an den zweiten Mitteilungsdienst (18) eine Anforderung zur Anmeldung des zweiten Mitteilungsdienstes (18) als Empfänger der Mitteilungen des besagten ersten Mitteilungsdienstes (16) und/oder zur Registrierung des ersten Mitteilungsdienstes (16) als Sender der Mitteilungen an den zweiten Mitteilungsdienst (18) zu schicken.

17. Netzwerk gemäß Anspruch 16, **dadurch gekennzeichnet, daß** der zweite Mitteilungsdienst (18) für die Anmeldung des zweiten Mitteilungsdienstes (18) als Empfänger der Mitteilungen des besagten ersten Mitteilungsdienstes (16) Vorrichtungen beinhaltet, um an den ersten Mitteilungsdienst (16) einen Identifier des zweiten Mitteilungsdienstes (18) zu schicken, während der erste Mitteilungsdienst (16) Vorrichtungen beinhaltet, um den besagten Identifier des zweiten Mitteilungsdienstes zu speichern und danach Mitteilungen an den zweiten Mitteilungsdienst zu übermitteln.

18. Netzwerk gemäß Anspruch 16 oder 17, **dadurch gekennzeichnet, daß** der zweite Mitteilungsdienst (18) für die Registrierung des ersten Mitteilungsdienstes (16) als Sender der Mitteilungen an den zweiten Mitteilungsdienst (18) Vorrichtungen beinhaltet, um an den ersten Mitteilungsdienst (16) eine Anmeldungsmeldung zu schicken, während der erste Mitteilungsdienst (16) Vorrichtungen beinhaltet, um an den zweiten Mitteilungsdienst (18) einen Identifier des ersten Mitteilungsdienstes (16) zu schicken, und der zweite Mitteilungsdienst (18) Vorrichtungen beinhaltet, um den besagten Identifier des ersten Mitteilungsdienstes (16) zu speichern und danach Mitteilungen vom ersten Mitteilungsdienst (16) entgegenzunehmen.

19. Netzwerk gemäß Anspruch 14 oder 17, **dadurch gekennzeichnet, daß** jeder Mitteilungsdienst (16, 18) eine Gruppe von Softwarekomponenten (30, 32, 34, 40, 42) beinhaltet, die jeweils mindestens einen Mitteilungskanal (32, 34, 40) enthalten, der einer festgelegten Mitteilungskategorie zugehörig ist, sowie dadurch, daß zur Anmeldung des zweiten Mitteilungsdienstes (18) als Empfänger der Mitteilungen des besagten ersten Mitteilungsdienstes (16) der besagte und einer festgelegten Mitteilungskategorie zugeordnete Mitteilungskanal (32) Vorrichtungen zur Verwendung des Identifiers des zugehörigen Mitteilungskanals (42) beinhaltet, der dem zweiten Mitteilungsdienst (18) bei der Übermittlung der besagten Mitteilung zugeordnet ist.

20. Netzwerk gemäß Anspruch 15 oder 18, **dadurch gekennzeichnet, daß** jeder Mitteilungsdienst (16, 18) eine Gruppe von Softwarekomponenten (30, 32, 34, 40, 42) beinhaltet, die jeweils mindestens einen Mitteilungskanal (32, 34, 40) enthalten, der einer festgelegten Mitteilungskategorie zugehörig ist, sowie dadurch, daß zur Registrierung des ersten Mitteilungsdienstes (16) als Sender der Mitteilungen an den zweiten Mitteilungsdienst (18) der Mitteilungskanal (42) des zweiten Mitteilungsdienstes (18), welcher der festgelegten Mitteilungskategorie zugeordnet ist, Vorrichtungen zur Verwendung des Identifiers des Mitteilungskanals (32) beinhaltet, der dem ersten Mitteilungsdienst (16) bei der Übermittlung der besagten Mitteilung zugeordnet ist.

21. Netz gemäß einem oder mehreren der Ansprüche 12 bis 20, **dadurch gekennzeichnet, daß** mindestens einer der Sender und Empfänger ein Objekt ist.

## Claims

1. A method of transmitting a notification in a distributed-application data processing network, from an emitter (10A) belonging to a first notification zone (10) having a first notification service (16) associated therewith, to a receiver (12A) belonging to a second notification zone (12) having a second notification service (18) associated therewith, each notification service being adapted to notify notifications of a determined category to receivers enrolled with the notification service and/or to pick up notifications of a determined category from emitters registered with the notification service, the method being **characterized in that** it comprises the steps consisting in:
· firstly enrolling the second notification service (18) as a receiver of notifications from said first notification service (16) and/or registering the first notification service (16) as an emitter of notifications to the second notification service (18); and
· secondly transmitting said notification from said emitter (10A) to said receiver (12A) via the first notification service (16) and the second notification service (18) in succession.

2. A method according to claim 1, **characterized in that** the step of enrolling the second notification service (18) as a receiver of notifications from said first notification service (18) and/or of registering the first notification service (16) as an emitter of notifications to the second notification service (18) is performed on a notification service administrator (50) making a request to the first notification service (16).

3. A method according to claim 2, **characterized in that** the step of enrolling the second notification service (18) as a receiver of notifications from said first notification service (16) includes the following successive steps:
· the first notification service (16) addresses a registration message to the second notification service (18);
· the second notification service (18) returns an identifier of the second notification service (18) to the first notification service (16); and
· the first notification service (16) stores said identifier of the second notification service for subsequent transmission of notifications to the second notification service (18).

4. A method according to claim 2 or 3, **characterized in that** the step of registering the first notification service (16) as an emitter of notifications to the second notification service (18) includes the following successive steps:
· the first notification service (16) addresses an identifier of the first notification service (16) to the second notification service (18); and
· the second notification service (18) stores said identifier of the first notification service (16) to subsequently pick up notifications from the first notification service (16).

5. A method according to claim 1, **characterized in that** the step of enrolling the second notification service (18) as a receiver of notifications from said first notification service (16) and/or of registering the first notification service (16) as a transmitter of notifications to the second notification service (18) is performed by a notification service administrator (62) making a request to the second notification service (18).

6. A method according to claim 5, **characterized in that** the step of enrolling the second notification service (18) as a receiver of notifications from said first notification service (16) includes the following successive steps:
· the second notification service (18) addresses an identifier of the second notification service (18) to the first notification service (16); and
· the first notification service (16) stores said identifier of the second notification service subsequently to notify notifications to the second notification service.

7. A method according to claim 5 or 6, **characterized in that** the step of registering the first notification service (16) as an emitter of notifications to the second notification service (18) includes the following successive steps:
· the second notification service (18) addresses an enrollment message to the first notification service (16);
· the first notification service (16) returns an identifier of the first notification service (16) to the second notification service (18); and
· the second notification service (18) stores said identifier of the first notification service (18) subsequently to pick up notifications from the first notification service (16).

8. A method according to claim 3 or 6, **characterized in that** each notification service (16, 18) comprises a set of software components (30, 32, 34, 40, 42) each including at least one notification channel (32, 34, 40) specific to a determined category of notifications, and **in that** the step of enrolling the second notification service (18) as a receiver of notifications from said first notification service (16) is performed, when said notification is notified, by said notification channel (32) of the first notification service (16) corresponding to the determined category of notifications implementing the identifier of the notification channel (42) associated with the second notification service (18).

9. A method according to claim 4 or 7, **characterized in that** each notification service (16, 18) comprises a set of software components (30, 32, 34, 40, 42) each including at least one notification channel (32, 34, 40) specific to a determined category of notifications, and **in that** the step of registering the first notification service (16) as an emitter of notifications to the second notification service (18) is performed, while picking up said notification, by the notification channel (42) of the second notification service (18) corresponding to the determined category of notifications implementing the identifier of the notification channel (32) associated with the first notification service (16).

10. A method according to any preceding claim, **characterized in that** the notification is transmitted from said emitter (10A) to said receiver (12A) on the initiative of said emitter (10A).

11. A method according to any one of claims 1 to 9, **characterized in that** the notification is transmitted from said emitter (10A) to said receiver (12A) on the request of said receiver (12A).

12. A distributed-application information processing network comprising firstly a first notification zone (10) having a first notification service (16) associated therewith and having an emitter (10A) linked thereto, and secondly a second notification zone (12) having a second notification service (18) associated therewith and having a receiver (12A) linked thereto, each notification service including means for notifying notifications of a determined category to receivers enrolled with the notification service and/or for picking up notifications of a determined category from emitters registered with the notification service, the network being **characterized in that** it includes means for enrolling the second notification service (18) as a receiver of notifications from said first notification service (16) and/or for registering the first notification service (16) as an emitter of notifications to the second notification service (18), and means for transmitting said notification from said emitter (10A) to said receiver (12A) via the first notification service (16) and the second notification service (18) in succession.

13. A network according to claim 12, **characterized in that** it includes a notification service administrator (50) adapted to address to the first notification service (16) a request for enrollment of the second notification service (18) as a receiver of notifications from said first notification service (16) and/or for registration of the first notification service (16) as an emitter of notifications to the second notification service (18).

14. A network according to claim 13, **characterized in that** to enroll the second notification service (18) as a receiver of notifications from said first notification service (16), the first notification service (16) includes means for addressing a registration message to the second notification service (18), the second notification service (18) includes means for returning an identifier of the second notification service (18) to the first notification service (16), and the first notification service (16) includes means for storing said identifier of the second notification service in order subsequently to transmit notifications to the second notification service (18).

15. A network according to claim 13 or 14, **characterized in that** to register the first notification service (16) as an emitter of notifications to the second notification service (18), the first notification service (16) includes means for addressing an identifier of the first notification service (16) to the second notification service (18), and the second notification service (18) includes means for storing said identifier of the first notification service (16) in order subsequently to pick up notifications from the first notification service (16).

16. A network according to claim 12, **characterized in that** it includes a notification service administrator (62) adapted to address to the second notification service (18) a request to enroll the second notification service (18) as a receiver of notifications from said first notification service (16) and/or to register the first notification service (16) as an emitter of notifications to the second notification service (18).

17. A network according to claim 16, **characterized in that** to enroll the second notification service (18) as a receiver of notifications from said first notification service (16), the second notification service (18) includes means for addressing an identifier of the second notification service (18) to the first notification service (16), and the first notification service (16) includes means for storing said identifier of the second notification service in order subsequently to notify notifications to the second notification service.

18. A network according to claim 16 or 17, **characterized in that** to register the first notification service (16) as an emitter of notifications to the second notification service (18), the second notification service (18) includes means for addressing an enrollment message to the first notification service (16), the first notification service (16) includes means for returning an identifier of the first notification service (16) to the second notification service (18), and the second notification service (18) includes means for storing said identifier of the first notification service (16) in order subsequently to pick up notifications from the first notification service (16).

19. A network according to claim 14 or 17, **characterized in that** each notification service (16, 18) comprises a set of software components (30, 32, 34, 40, 42) each including at least one notification channel (32, 34, 40) specific to a determined category of notifications, and **in that** to enroll the second notification service (18) as a receiver of notifications from said first notification service (16), said notification channel (32) of the first notification service (16) corresponding to the determined category of notifications includes means that operate during notification of said notification to implement the identifier of the associated notification channel (42) of the second notification service (18).

20. A network according to claim 15 or 18, **characterized in that** each notification service (16, 18) comprises a set of software components (30, 32, 34, 40, 42) each including at least one notification channel (32, 34, 40) specific to a determined category of notifications, and **in that** to register the first notification service (16) as an emitter of notifications to the second notification service (18), the notification channel (42) of the second notification service (18) corresponding to the determined category of notifications includes means that operate while picking up said notification to implement the identifier of the associated notification channel (32) of the first notification service (16).

21. A network according to any one of claims 12 to 20, **characterized in that** at least one of the emitters and receivers is an object.
